# EUROPÄISCHE PATENTSCHRIFT

(11) **EP 3 238 808 B1**
(45) Veröffentlichungstag und Bekanntmachung des Hinweises auf die Patenterteilung: **13.03.2019**
(21) Anmeldenummer: 16000961.9
(22) Anmeldetag: 28.04.2016
(51) Int. Cl.: B01D 53/047, B01D 53/22, C01B 23/00

(54) **VERFAHREN UND VERFAHRENSTECHNISCHE ANLAGE ZUM GEWINNEN VON HELIUM AUS EINEM HELIUM-HALTIGEN EINSATZGAS**
METHOD AND PROCESS FOR RECOVERING HELIUM FROM A FEED GAS CONTAINING HELIUM
PROCÉDÉ ET INSTALLATION TECHNOLOGIQUE DESTINÉS À PRODUIRE DE L'HELIUM À PARTIR D'UN GAZ ACTIF CONTENANT DE L'HELIUM

(43) Veröffentlichungstag der Anmeldung: 01.11.2017
(73) Patentinhaber: Linde Aktiengesellschaft, 80331 München (DE)
(72) Erfinder: Keller, Tobias, 83620 Feldkirchen-Westerham (DE); Voss, Christian, 82538 Geretsried (DE); Bauer, Martin, 80804 München (DE); Jennewein, Frank, 81379 München (DE)

(56) Entgegenhaltungen:
- EP-A1- 0 945 163
- EP-A2- 0 684 066
- WO-A1-03/011431
- WO-A1-03/011434
- CA-A1- 2 183 832
- DE-A1-102007 022 963

## Beschreibung

Die Erfindung betrifft ein Verfahren und eine verfahrenstechnische Anlage zum Gewinnen von Helium aus einem Helium-haltigen Einsatzgas.
Helium ist für viele Anwendungen von großer Bedeutung, liegt jedoch in der Regel nur in geringer Konzentration, beispielsweise in Erdgas oder Spülgasen diverser Produktionsverfahren, vor. Da es sich bei Helium um einen endlichen Rohstoff handelt, sind Verfahren, mit denen Helium gewonnen oder zurückgewonnen werden kann, von zunehmender wirtschaftlicher Bedeutung. Aussichtsreiche neue Verfahren sind Membran-Verfahren oder kombinierte Membran-Druckwechsel-Adsorptionsverfahren, welche eine kostengünstige und zuverlässige Produktion von hochreinem Helium ermöglichen. Die Membranen sind hierbei durch eine geeignete Vorbehandlung des Einsatzgases vor Schadkomponenten, welche die Leistungsdaten und Lebensdauer der Membrane negativ beeinflussen können, zu schützen. Schadkomponenten sind beispielsweise höhere Kohlenwasserstoffe (HHC), Wasser (H₂0), Schwefelwasserstoff (H₂S) oder Kohlendioxid (CO₂).
Üblicherweise erfolgt die Vorbehandlung des Einsatzgases, das heißt, die Abtrennung der Schadkomponenten, mittels aufwendiger Verfahrensschritte, wie beispielsweise einer Wäsche, einer Temperaturwechsel-Adsorption, der Verwendung einer kryogenen Einheit oder einer Kombination der vorgenannten Vorbehandlungsverfahren. Hierbei ist neben den signifikanten Investitionskosten ein wesentlicher Aufwand für die Aufarbeitung und Bereitstellung des Waschmittels, die Regenerierwärme oder die Kälteerzeugung erforderlich.
EP0684066A2 beschreibt ein Verfahren zum Gewinnen von Helium aus einem Helium-haltigen Einsatzgas mittels einer Vorreinigungseinheit sowie einer der Vorreinigungseinheit nachgeschalteten Membraneinheit, wobei diese Vorreinigungseinheit eine TSA-Einheit ist und der Helium-arme Retentatstrom der Membraneinheit abgeführt wird.

CA2183832 beschreibt ein Verfahren zum Gewinnen von Helium aus einem Einsatzgas mittels einer Membraneinheit als Vorreinigungseinheit sowie einer der Vorreinigungseinheit nachgeschalteten PSA-Einheit zum Produzieren des gewünschten, hochreinen Produktgases.

Die US 2014/0243574 A1 beschreibt ein Verfahren zum Gewinnen von Helium aus einem Einsatzgas. Hierbei wird das Einsatzgas einer ersten Membrantrennstufe zugeführt. Diese trennt das Einsatzgas in einen ersten Permeatstrom, der einen hohen Anteil an Helium enthält, und einen ersten Retentatstrom auf. Der erste Permeatstrom wird vor einem Kompressor mit einem dritten Permeatstrom kombiniert und nach dem Verdichten einer zweiten Membrantrennstufe zugeführt. Diese trennt das verdichtete Gas in einen zweiten Permeatstrom und einen zweiten Retentatstrom auf. Der zweite Retentatstrom wird einer dritten Membrantrennstufe zugeführt, die diesen in den dritten Permeatstrom und einen dritten Retentatstrom auftrennt. Der erste und der dritte Retentatstrom werden dann zusammengeführt, um einen Erdgasstrom zu bilden.
Die US 2015/0182908 A1 beschreibt ein Verfahren zum Trennen eines Gasgemisches mit einem kleinen Anteil eines ersten Gases und einem Hauptanteil eines zweiten Gases. Eine erste Gasmischung wird mit Hilfe einer ersten Membrantrennstufe in ein erstes Permeat und eine erstes Retentat aufgetrennt. An einer zweiten Membrantrennstufe wird ein zweites Gasgemisch in ein zweites Permeat und ein zweites Retentat aufgetrennt, wobei das erste Gas im Vergleich zum zweiten Gas leichter durch die Membrantrennstufen permeiert. Das zweite Permeat wird in einen ersten und einen zweiten Anteil aufgeteilt, wobei der erste Anteil des zweiten Permeats ein erstes Produktgas bildet, dessen Hauptanteil das erste Gas ist, und das zweite Retentat ein zweites Produktgas bildet, dessen Hauptanteil das zweite Gas ist. Das erste Permeat wird zusammen mit dem zweiten Anteil mit Hilfe eines Kompressors komprimiert, um die zweite Gasmischung zu bilden. Die erste Gasmischung wird durch eine Kombination des zweiten Retentats mit einem Quellgas erlangt.
Vor diesem Hintergrund besteht eine Aufgabe der vorliegenden Erfindung darin, ein verbessertes Verfahren zur Verfügung zu stellen.
Demgemäß wird ein Verfahren zum Gewinnen von Helium aus einem Helium-haltigen Einsatzgas vorgeschlagen. Das Verfahren umfasst die folgenden Schritte: Zuführen des Helium-haltigen Einsatzgases zu einer Vorreinigungseinheit, wobei mit Hilfe der Vorreinigungseinheit in einem Druckwechsel-Adsorptions-Prozess Schadkomponenten aus dem Helium-haltigen Einsatzgas entfernt werden, um ein vorgereinigtes Einsatzgas zu erhalten, Zuführen des vorgereinigten Einsatzgases zu einer der Vorreinigungseinheit nachgeschalteten Membraneinheit, welche zumindest eine Membran aufweist, die für Helium leichter permeabel ist als für zumindest eine weitere in dem vorgereinigten Einsatzgas enthaltene Komponente, Zuführen eines druckbeaufschlagten Helium-armen Retentatstroms der Membraneinheit, welcher die zumindest eine Membran nicht durchtreten hat, zu der Vorreinigungseinheit und Verdrängen von Helium-reichem Gas mit Hilfe des druckbeaufschlagten Helium-armen Retentatstroms aus einem zu regenerierenden Adsorber der Vorreinigungseinheit in einen bereits regenerierten Adsorber der Vorreinigungseinheit.

Darunter, dass mit Hilfe der Vorreinigungseinheit in einem Druckwechsel-Adsorptions-Prozess Schadkomponenten aus dem Helium-haltigen Einsatzgas entfernt werden, ist insbesondere zu verstehen, dass die Schadkomponenten vollständig oder teilweise aus dem Helium-haltigen Einsatzgas entfernt werden. Unter einem Permeat ist der Anteil eines Gasstroms zu verstehen, der durch eine Membran hindurchtritt und als Retentat ist der Anteil des Gasstroms zu verstehen, der von der Membran zurückgehalten wird. Das Einsatzgas kann auch als Prozessgas oder Feedgas bezeichnet werden. Das Einsatzgas weist vorzugsweise einen hohen Druck von beispielsweise 40 bara auf. Das Einsatzgas kann beispielsweise Erdgas oder ein Spülgas eines anderen Produktionsverfahrens sein. Die Vorreinigungseinheit ist zur Durchführung eines Vorreinigungs-Druckwechsel-Adsorptionsverfahrens (engl.: Pre Purification Pressure Swing Adsorption oder PP-PSA) geeignet. Daher kann die Vorreinigungseinheit auch als PP-PSA-Einheit bezeichnet werden. Darunter, dass der druckbeaufschlagte Helium-arme Retentatstroms das Helium-reiche Gas aus dem zu regenerierenden Adsorber verdrängt, ist zu verstehen, dass das Helium-reiche Gas von dem druckbeaufschlagten Helium-armen Retentatstrom aus dem zu regenerierenden Adsorber herausgedrückt und in den bereits regenerierten Adsorber hineingedrückt wird. Dies geschieht unter dem hohen Druck des Helium-armen Retentatstroms. Das Helium-reiche Gas weicht aufgrund der Sorptionsvorgänge und Druckabsenkung in den E-Takten in der Zusammensetzung von dem Helium-haltigen Einsatzgas ab.

Bei einem Druckwechsel-Adsorptionsverfahren (engl.: Pressure Swing Adsorption oder PSA) werden spezielle poröse Materialien wie Zeolithe oder Aktivkohle als Adsorbens in den Adsorbern eingesetzt. Die Trennwirkung kann hierbei durch drei verschiedene Prinzipien, nämlich der Trennung aufgrund der Gleichgewichtsadsorption, der Trennung aufgrund der Adsorptionskinetik oder der Trennung aufgrund einer Siebwirkung (sterischer Effekt), erfolgen. Im ersten Fall wird eine der zu trennenden Komponenten stärker adsorbiert als eine andere, dadurch findet eine Anreicherung der schlechter adsorbierten Komponente in der Gasphase statt. Im zweiten Fall durchdringen bestimmte Moleküle schneller die poröse Struktur des Adsorbens. Wird das Adsorbens nun in einem Reaktorbett vom Gasgemisch durchströmt, so benötigt die Komponente, die schlechter in die Poren eindringt, weniger Zeit um vorbeizuströmen, gelangt also eher zum Ausgang des Reaktorbetts. Im dritten Fall werden nur jene Moleküle adsorbiert, deren Durchmesser kleiner sind als die Porendurchmesser des Adsorbens. Moleküle mit größerem Durchmesser als der Porendurchmesser des Adsorbens passieren die Adsorbensschicht.

Bei dem PSA-Verfahren wird der Einsatzgasstrom unter erhöhtem Druck in einen Festbettreaktor, der mit dem Adsorbens gefüllt ist, eingeleitet, so dass dieses durchströmt wird. Die Schadkomponenten des Einsatzgasstroms werden nun adsorbiert. Am Ausgang des Adsorbers kann die Produktkomponente in aufkonzentrierter Form entnommen werden. Nach einer Weile ist das Adsorberbett weitestgehend gesättigt und es tritt ein Teil der Schadkomponenten mit aus. In diesem Moment wird über Ventile der Prozess so umgeschaltet, dass der Zustrom des Einsatzgases in den beladenen Adsorber gestoppt und stattdessen in einen regenerierten Adsorber geleitet wird, der seinerseits nun Produktgas produziert. Der beladene Adsorber muss regeneriert werden, bevor er erneut Einsatzgas aufnehmen und damit auch Produktgas produzieren kann. Die Regenerierung des Adsorbers erfolgt bevorzugt bei möglichst niedrigem Druck, das heißt, der auf erhöhtem Druck beladene Adsorber muss vor dem Regenerieren entspannt werden. Beim Absenken des Drucks wird die Ausbeute der Produktkomponente erhöht, indem ein bestimmter erster Anteil der Druckabsenkung über Kopf in einen regenerierten Adsorber erfolgt. Hierdurch wird Helium-reiches Gas aus dem beladenen Adsorber, welches sich, aufgrund der sich während der Adsorptionsphase über dem Adsorbensbett ausbildenden Konzentrationsfronten und -bereiche, im oberen Bereich des Adsorberbetts des beladenen Adsorbers befindet in dem regenerierten Adsorber gespeichert und damit zurückgewonnen. Bei dem niedrigen Druck wird der Adsorber regeneriert, das heißt, das adsorbierte Gas wird wieder desorbiert und am Auslass gewonnen. Zumindest zwei wechselseitig be- und entladene Adsorber ermöglichen dabei einen kontinuierlichen Betrieb. Um den Überstand an desorbierter Schadkomponenten aus dem Adsorberbett auszutreiben, wird üblicherweise mit einem Anteil der Produktkomponente nachgespült.

Durch den Einsatz der PP-PSA-Einheit erfolgt die Vorbehandlung des Einsatzgases in nur einem einzigen Verfahrensschritt, wodurch auf den Einsatz von üblichen und aufwendigen Vorbehandlungsschritten, wie beispielsweise einer Wäsche, einer Temperaturwechsel-Adsorption (engl.: Temperature Swing Adsorption oder TSA) oder der Verwendung einer kryogenen Einheit, verzichtet werden kann. Die Membranen der Membraneinheit werden vor einer Beladung oder Verschmutzung mit den Schadkomponenten geschützt. Durch die Verwendung des druckbeaufschlagten Retentatstroms der Membraneinheit in der PP-PSA-Einheit können die Verluste der Produktkomponente über der PP-PSA-Einheit auf ein Minimum reduziert werden und liegen damit in derselben Größenordnung wie die üblichen vorgenannten Verfahren zur Vorbehandlung des Einsatzgases. Durch das Verwenden des druckbeaufschlagten Retentatstroms in der PP-PSA-Einheit wird obendrein eine zumindest teilweise Rückgewinnung der im Retentat enthaltenen Produktkomponente und damit eine weitere Steigerung der Gesamtausbeute erreicht. Die Produktkomponente kann auch als Wertkomponente bezeichnet werden. Vorzugsweise ist die Produktkomponente Helium.

Gemäß einer Ausführungsform wird ein erster Permeatstrom der Membraneinheit einer He-PSA-Einrichtung zugeführt, mit Hilfe welcher der erste Permeatstrom bis auf eine Reinheit von Helium von größer als 99,0 Volumenprozent aufgereinigt wird.

Hierdurch kann eine besonders hohe Reinheit der Wertkomponente erreicht werden.

Gemäß einer weiteren Ausführungsform weist der druckbeaufschlagte Helium-arme Retentatstrom einen Druck von 35 bis 40 bara, bevorzugt von 36 bis 39 bara, weiter bevorzugt von 37 bara auf.

Hierdurch kann der Retentatstrom in den Adsorbern der Vorreinigungseinheit verwendet werden. Ein Verdichten des Retentatstroms mit Hilfe eines zusätzlichen Verdichters ist verzichtbar. Hierdurch können Kosten eingespart werden. Die Einheit bara bezeichnet hierbei den absoluten Druck. Der bevorzugte Druckbereich des Einsatzgases bewegt sich zwischen 5 und 60 bara. Der Druck des Retentatstroms, welcher in der Vorreinigungseinheit verwendet wird, sollte für den EB-Schritt und für den optionalen Druckaufbau mit Retentat in den Schritten R1 und/oder R0 grundsätzlich insbesondere möglichst hoch, das heißt, möglichst nah am Druck des Einsatzgases sein (Beispielsweise bei 70 % des Drucks des Einsatzgases, bevorzugt bei 80 % des Drucks des Einsatzgases, weiter bevorzugt bei 90 % des Drucks des Einsatzgases). Für das optionale Regenerieren mit Retentat würde insbesondere ein Retentatdruck von lediglich 1 bis 10 % des Drucks des Einsatzgases ausreichen weil das Spülen im Adsorber bei niedrigem Druck - bei vorzugsweise ca. 1,5 bara - durchgeführt wird. Insbesondere kann der Retentatdruck auch 1 bis 5 %, bevorzugt 1 bis 20 % des Drucks des Einsatzgases betragen.

Gemäß einer weiteren Ausführungsform ist der druckbeaufschlagte Helium-arme Retentatstrom ein Stickstoff-reicher Strom oder der druckbeaufschlagte Helium-arme Retentatstrom ist ein Methan-reicher Strom.

Der Stickstoff-reiche Strom ist arm an Schadkomponenten. Der Stickstoff-reiche Strom kann die desorbierten Schadkomponenten aus einem zu regenerierenden Adsorber aufnehmen. Bei der Gewinnung von Helium aus Erdgas ist der druckbeaufschlagte Helium-arme Retentatstrom ein Methan-reicher Strom.

Gemäß einer weiteren Ausführungsform ist die zumindest eine weitere in dem vorgereinigten Einsatzgas enthaltene Komponente Stickstoff.

Insbesondere sind die Membranen der Membraneinheit so ausgelegt, dass Helium leichter durch diese diffundiert als Stickstoff. Das vorgereinigte Einsatzgas kann noch weitere Komponenten enthalten.

Gemäß einer weiteren Ausführungsform umfassen die Schadkomponenten Kohlendioxid, höhere Kohlenwasserstoffe, Schwefeldioxid und/oder Wasser.

Durch die Abtrennung dieser Schadkomponenten werden eine Beschädigung und/oder ein Leistungsrückgang der Membranen der Membraneinheit verhindert. Dies erhöht die Lebensdauer der Membraneinheit und reduziert die Wartungskosten.

Gemäß einer weiteren Ausführungsform wird der druckbeaufschlagte Helium-arme Retentatstrom zum Regenerieren eines zu regenerierenden Adsorbers der Vorreinigungseinheit eingesetzt und/oder der druckbeaufschlagte Helium-arme Retentatstrom wird zum Druckaufbau in einem mit Druck zu beaufschlagenden Adsorber der Vorreinigungseinheit eingesetzt.

Dies wird dadurch ermöglicht, dass der Retentatstrom ein Schadkomponenten-armer Strom ist. Das Regenerieren beziehungsweise Spülen des Adsorbers erfolgt vorzugsweise bei geringem Druck.

Gemäß einer weiteren Ausführungsform wird nur ein Teilstrom des druckbeaufschlagten Helium-armen Retentatstroms verwendet.

Ein weiterer Teilstrom des Permeatstroms kann beispielsweise thermisch verwertet, insbesondere abgefackelt, werden.

Gemäß einer weiteren Ausführungsform gibt vor dem Verdrängen des Helium-reichen Gases mit Hilfe des druckbeaufschlagten Helium-armen Retentatstroms ein zu regenerierender Adsorber Helium-reiches Gas an einen bereits regenerierten Adsorber ab.

Am Ende der Adsorption ist im zu regenerierenden Adsorber noch ein wesentlicher Anteil der Wertkomponente vorhanden. Dieser Anteil soll möglichst nicht verloren gehen sondern rückgewonnen werden, um die Ausbeute der PP-PSA-Einheit zu steigern. Hierzu gibt der zu regenerierende Adsorber vorzugsweise über ein Ventil über Kopf Gas an den bereits regenerierten Adsorber ab und speichert somit einen gewissen Anteil der im zu regenerierenden Adsorber vorhandenen Wertkomponente in dem bereits regenerierten Adsorber.

Gemäß einer weiteren Ausführungsform wird mit Hilfe der Membraneinheit an einer ersten Membrantrennstufe ein erster Helium-armer druckbeaufschlagter Retentatstrom und an einer zweiten Membrantrennstufe wird aus dem ersten Helium-armen druckbeaufschlagten Retentatstrom ein zweiter Helium-armer druckbeaufschlagter Retentatstrom erzeugt, welcher der Vorreinigungseinheit zugeführt wird.

Die Membraneinheit kann eine beliebige Anzahl an Membrantrennstufen, beispielsweise zwei, aufweisen. Der Retentatstrom jeder Membrantrennstufe kann der PP-PSA-Einheit zugeführt werden. Beispielsweise wird der Retentatstrom der letzten Membrantrennstufe der PP-PSA-Einheit zugeführt.

Gemäß einer weiteren Ausführungsform wird an der ersten Membrantrennstufe ein erster Helium-reicher Permeatstrom erzeugt, der zum Abspalten eines Helium-reichen Produktgasstroms einer He-PSA-Einrichtung der Membraneinheit zugeführt wird.

Der erste Permeatstrom kann einen Heliumanteil von mehr als 30 Volumenprozent aufweisen. Die He-PSA-Einrichtung ist vorzugsweise dazu eingerichtet, mittels Druckwechseladsorption (engl.: Helium Pressure Swing Adsorption oder He-PSA) den ersten Permeatstrom in den Produktgasstrom hoher Reinheit und in einen Spülgasstrom aufzutrennen. Der Produktgasstrom kann einen Heliumanteil von über 99,0 Volumenprozent aufweisen.

Gemäß einer weiteren Ausführungsform wird der erste Helium-reiche Permeatstrom vor dem Zuführen zu der He-PSA-Einrichtung mit Hilfe eines ersten Verdichters verdichtet.

Der erste Verdichter oder Kompressor ist optional. Hierdurch kann das Druckniveau des ersten Permeatstroms auf einen für die He-PSA-Einrichtung geeigneten Wert angehoben werden.

Gemäß einer weiteren Ausführungsform wird an der zweiten Membrantrennstufe ein zweiter Helium-reicher Permeatstrom erzeugt, der zusammen mit einem Spülgasstrom der He-PSA-Einrichtung wieder der ersten Membrantrennstufe zugeführt wird.

Der Druck der Permeatströme ist geringer als der der Retentatströme. Beispielsweise können die Permeatströme jeweils einen Druck von etwa 2 bara aufweisen. Der Spülgasstrom der He-PSA-Einrichtung weist vorzugsweise einen Druck von 1,5 bara auf.

Gemäß einer weiteren Ausführungsform werden der zweite Helium-reiche Permeatstrom und der Spülgasstrom der He-PSA-Einrichtung vor dem Zuführen zu der ersten Membrantrennstufe zusammen mit Hilfe eines zweiten Verdichters verdichtet.

Hierdurch kann der Druck des Gemisches aus Permeat und Spülgas wieder auf das Druckniveau des vorgereinigten Einsatzgasstroms angehoben werden.

Weiterhin wird eine verfahrenstechnische Anlage, insbesondere zum Durchführen eines derartigen Verfahrens, zum Gewinnen von Helium aus einem Helium-haltigen Einsatzgas vorgeschlagen. Die verfahrenstechnische Anlage umfasst eine Vorreinigungseinheit, die dazu eingerichtet ist, mit Hilfe eines Druckwechsel-Adsorptions-Prozesses Schadkomponenten aus dem Helium-haltigen Einsatzgas zu entfernen, um ein vorgereinigtes Einsatzgas zu erhalten, eine der Vorreinigungseinheit nachgeschaltete Membraneinheit, welche zumindest eine Membran aufweist, die für Helium leichter permeabel ist als für zumindest eine weitere in dem vorgereinigten Einsatzgas enthaltene Komponente, um einen druckbeaufschlagten Helium-armen Retentatstrom zu erzeugen, welcher die zumindest eine Membran nicht durchtreten hat, wobei die Vorreinigungseinheit mehrere Adsorber und mehrere Ventile aufweist, die so schaltbar sind, dass mit Hilfe des druckbeaufschlagten Helium-armen Retentatstroms Helium-reiches Gas aus einem zu regenerierenden Adsorber in einen bereits regenerierten Adsorber verdrängbar ist.

Die für das vorgeschlagene Verfahren beschriebenen Ausführungsformen und Merkmale gelten für die vorgeschlagene verfahrenstechnische Anlage entsprechend.

Insbesondere weist die Membraneinheit mehrere Membrantrennstufen auf, wobei der druckbeaufschlagte Helium-arme Retentatstrom vorzugsweise von der letzten Membrantrennstufe abgezogen wird. Die PP-PSA-Einheit kann eine Vielzahl an Adsorbern, beispielsweise vier bis sechzehn, aufweisen. In einer besonders bevorzugten Ausführungsform weist die PP-PSA-Einheit jedoch sechs Adsorber auf. Die Adsorber sind miteinander verschaltet und werden in einem definierten Taktschema betrieben.

Weitere mögliche Implementierungen des Verfahrens und/oder der verfahrenstechnischen Anlage umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform des Verfahrens und/oder der verfahrenstechnischen Anlage hinzufügen.

Weitere vorteilhafte Ausgestaltungen und Aspekte des Verfahrens und/oder der verfahrenstechnischen Anlage sind Gegenstand der Unteransprüche sowie der im Folgenden beschriebenen Ausführungsbeispiele des Verfahrens und/oder der verfahrenstechnischen Anlage. Im Weiteren werden das Verfahren und/oder die verfahrenstechnischen Anlage anhand von bevorzugten Ausführungsformen unter Bezugnahme auf die beigelegten Figuren näher erläutert.
Fig. 1 zeigt eine schematische Ansicht einer Ausführungsform einer verfahrenstechnischen Anlage zum Gewinnen von Helium aus einem heliumhaltigen Einsatzgas;
Fig. 2 zeigt eine schematische Ansicht einer Ausführungsform einer Vorreinigungseinheit für die Anlage gemäß Fig. 1;
Fig. 3 zeigt eine Ausführungsform eines Taktschemas für die Vorreinigungseinheit gemäß Fig. 2;
Fig. 4 zeigt eine Ausführungsform eines Druckprofils eines Adsorbers der Vorreinigungseinheit gemäß Fig. 2; und
Fig. 5 zeigt ein schematisches Blockdiagramm einer Ausführungsform eines Verfahrens zum Gewinnen von Helium aus einem heliumhaltigen Einsatzgas.

In den Figuren sind gleiche oder funktionsgleiche Elemente mit denselben Bezugszeichen versehen worden, sofern nichts anderes angegeben ist.

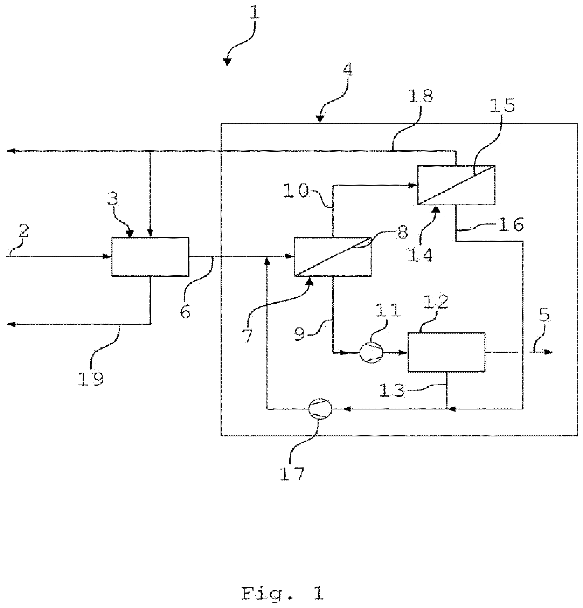

Die Fig. 1 zeigt eine schematische Ansicht einer verfahrenstechnischen Anlage 1. Insbesondere ist die Anlage 1 eine Anlage zur Gewinnung von Helium. Mit Hilfe der Anlage 1 kann aus einem auf hohem Druck vorliegenden Einsatzgas oder Einsatzgasstrom 2, welcher neben der Produktkomponente, wie beispielsweise Helium, mindestens eine schlechter durch eine Membran permeierende Komponente, wie beispielsweise Stickstoff, enthält, die Produktkomponente mit hoher Reinheit gewonnen werden. Insbesondere kann der Einsatzgasstrom 2 Stickstoff, Helium, höhere Kohlenwasserstoffe, Wasser, Schwefelwasserstoff und Kohlendioxid umfassen. Der Einsatzgasstrom 2 kann ein Erdgasstrom sein. Der Einsatzgasstrom 2 kann einen Druck von 40 bara aufweisen. Der bevorzugte Druckbereich für den Einsatzgasstrom 2 beträgt zwischen 10 und 60 bara.

Die Anlage 1 umfasst eine Vorreinigungseinheit 3 zur Durchführung eines Vorreinigungs-Druckwechsel-Adsorptionsverfahrens (engl.: Pre Purification Pressure Swing Adsorption oder PP-PSA). Daher kann die Vorreinigungseinheit 3, wie zuvor schon erwähnt, auch als PP-PSA-Einheit bezeichnet werden. Die Vorreinigungseinheit 3 ist dazu eingerichtet, den Einsatzgasstrom 2 zur Abtrennung von Schadkomponenten, wie beispielsweise höheren Kohlenwasserstoffen, Wasser, Schwefelwasserstoff und Kohlendioxid, vorzubehandeln, so dass der vorbehandelte Einsatzgasstrom 2 in einer Membraneinheit 4 verarbeitet und die Produktkomponente gewonnen und aufgereinigt werden kann. Mit Hilfe der Vorreinigungseinheit 3 werden sämtliche zuvor genannten Schadkomponenten aus dem Einsatzgasstrom 2 abgetrennt. Die Vorbehandlung des Einsatzgasstroms 2 erfolgt also in nur einem einzigen Verfahrensschritt. Hierdurch kann auf den Einsatz von üblichen und aufwendigen Vorbehandlungsschritten, wie beispielsweise einer Wäsche des Einsatzgasstroms 2, der Durchführung einer TSA oder der Verwendung einer kryogenen Einheit, verzichtet werden.

Die Membraneinheit 4 ist hierbei insbesondere dazu eingerichtet, ein Membran-Verfahren oder auch ein kombiniertes Membran-Druckwechseladsorptions-Verfahren zur Gewinnung und Aufreinigung der Produktkomponente durchzuführen. Die Produktkomponente kann an einem Austritt der Membraneinheit 4 als Hochdruckkomponente oder auch als Niederdruckkomponente vorliegen, je nach Ausgestaltung der Membraneinheit 4 als reine Membraneinheit oder als kombinierte Membran-Druckwechseladsorptions-Einheit. Beispielsweise kann so ein hochreiner Produktgasstrom 5 mit einem Heliumanteil von mehr als 99,0 Volumenprozent erreicht werden.

Der auf hohem Druck vorliegende Feedgasstrom oder Einsatzgasstrom 2 wird in die Vorreinigungseinheit 3 geleitet. Dort werden, wie zuvor erläutert, die Schadkomponenten abgetrennt. Das dabei erhaltene vorgereinigte Einsatzgas beziehungsweise der dabei erhaltene vorgereinigte Einsatzgasstrom 6, der im Wesentlichen Stickstoff und Helium aufweisen kann, wird dann in einer ersten Membrantrennstufe 7 mit Hilfe einer Membran 8 in ein Helium-angereichertes erstes Permeat beziehungsweise in einen Helium-angereicherten ersten Permeatstrom 9, der beispielsweise Stickstoff und Helium mit einem Heliumanteil von über 30 Volumenprozent aufweist, und in ein Helium-abgereichertes erstes Retentat beziehungsweise in einen Helium-abgereicherten ersten Retentatstrom 10, der ebenfalls Helium und Stickstoff aufweist, aufgetrennt. Dabei kann das Retentat der ersten Membrantrennstufe 7 einen Druck von etwa 38 bara aufweisen. Unter Permeat ist der Anteil des vorgereinigten Einsatzgasstroms 6 zu verstehen, der durch die Membran 8 hindurchtritt und als Retentat ist der Anteil des vorgereinigten Einsatzgasstroms 6 zu verstehen, der von der Membran 8 zurückgehalten wird.

Der Helium-angereicherte erste Permeatstrom 9 wird mit Hilfe eines optionalen ersten Kompressors oder Verdichters 11 verdichtet und einer He-PSA-Einrichtung 12 (engl.: Helium Pressure Swing Adsorption oder He-PSA) zugeführt. Die He-PSA-Einrichtung 12 ist dazu eingerichtet, mittels Druckwechseladsorption den ersten Permeatstrom 9 in den Produktgasstrom 5 hoher Reinheit und in einen Spülgasstrom 13 aufzutrennen. Die Membraneinheit 4 umfasst die He-PSA-Einrichtung 12.

In einer zweiten Membrantrennstufe 14 wird aus dem ersten Retentatstrom 10 der ersten Membrantrennstufe 7 mit Hilfe einer Membran 15 ein zweites Permeat beziehungsweise ein zweiter Permeatstrom 16 abgetrennt. Der zweite Permeatstrom 16 enthält Helium und Stickstoff und kann einen Druck von etwa 2 bara aufweisen. Dieser zweite Permeatstrom 16 wird mit dem Spülgasstrom 13 der He-PSA-Einrichtung 12 vermischt und mittels eines zweiten Kompressors oder Verdichters 17 auf einen höheren Druck, beispielsweise auf 39 bara, verdichtet. Dieses verdichtete Gemisch wird vor der ersten Membrantrennstufe 7 wieder dem vorgereinigten Einsatzgasstrom 6 zugeführt. Ein Helium-armes zweites Retentat beziehungsweise ein Helium-armer zweiter Retentatstrom 18, der im Wesentlichen Stickstoff aufweist, der zweiten Membrantrennstufe 14 wird aus dem Prozess ausgeschleust und kann für die Steigerung von Reinheit, Kapazität und Heliumausbeute in der Vorreinigungseinheit 3 genutzt oder abgefackelt werden. Der zweite Retentatstrom 18 kann einen Druck von etwa 37 bara aufweisen. Dadurch, dass der Einsatzgasstrom 2 mit Hilfe der Vorreinigungseinheit 3 von den Schadkomponenten befreit wird, ist eine Beschädigung der Membranen 8, 15 ausgeschlossen.

Zum einen ist die zweite Membrantrennstufe 14 wesentlich für die Heliumausbeute des beschriebenen Verfahrens verantwortlich. Hier wird ein Großteil des Heliums des ersten Retentatstroms 10 der ersten Membrantrennstufe 7 als zweiter Permeatstrom 16 abgetrennt und zusammen mit dem Spülgasstrom 13 der He-PSA-Einrichtung 12 zurückgeführt. Des Weiteren ist aber auch insbesondere die Heliumausbeute der Vorreinigungseinheit 3 für die Heliumausbeute der Anlage 1 entscheidend. Durch die Verwendung des zweiten Retentatstroms 18 der zweiten Membrantrennstufe 14 kann die Heliumausbeute der Vorreinigungseinheit 3 auf sehr hohe Werte angehoben werden.

Die Rückführung des Spülgasstroms 13 aus der He-PSA-Einrichtung 12 und dem zweiten Permeatstrom 16 der zweiten Membrantrennstufe 14 führt zur Anreicherung des Heliums im Kreislauf. Die in der Fig. 1 gezeigte Ausführungsform der Membraneinheit 4 ist nur beispielhaft. Es können auch mehr oder weniger als zwei Membrantrennstufen 7, 14 vorgesehen sein. Wichtig ist dabei nur, dass die Membraneinheit 4 einen im Wesentlichen von Schadkomponenten befreiten unter hohem Druck stehenden Retentatstrom 18 liefert. Hierbei dürfen gewisse, für die Membranen 8, 15 zulässige beziehungsweise akzeptable, Konzentrationen im vorgereinigten Einsatzgasstrom 6 enthalten sein. Das heißt, es können auch im zweiten Retentatstrom 18 entsprechende Konzentrationen der Schadkomponenten enthalten sein.

Bekannte PSA-Verfahren oder auch kurz einfach PSA (engl.: Pressure Swing Adsorption oder PSA) bringen einen nicht zu vernachlässigenden Verlust der Produktkomponente, wie beispielsweise Helium, mit sich. Üblicherweise sind jedoch hohe Ausbeuten der Produktkomponente verlangt. Um dies zu erreichen, wird vorliegend die Vorreinigungseinheit 3 deshalb mit einem zusätzlichen Verfahrensschritt betrieben, was eine sehr hohe Ausbeute der Produktkomponente ermöglicht. Das heißt, die Verluste der Produktkomponente werden auf ein Minimum reduziert. Der zusätzliche Verfahrensschritt beinhaltet das Verwenden des unter hohem Druck stehenden zweiten Retentatstroms 18 der schlechter permeierenden Komponente, wie beispielsweise Stickstoff, welcher auf der Retentatseite der zweiten Membrantrennstufe 14 anfällt. Zumindest ein Teilstrom dieses zweiten Ratentatstroms 18 wird in dem zusätzlichen Verfahrensschritt verwendet, um die Verluste der Produktkomponente über der Vorreinigungseinheit 3 auf ein Minimum zu reduzieren.

Bei Membran-Anlagen, welche keine hohe Ausbeute der Produktkomponente verlangen, kann durch die Verwendung dieses zusätzlichen Verfahrensschritts und die damit verbundene sehr hohe Ausbeute der Produktkomponente über der Vorreinigungseinheit 3 die Membran-Anlage kostengünstiger ausgeführt werden, da nahezu der gesamte Verlust der Produktkomponente über der Membran-Anlage anfallen kann.

Der zweite Retentatstrom 18 der zweiten oder letzten Membrantrennstufe 14 enthält einen gewissen Anteil der Produktkomponente, nämlich jenen, welcher nicht über den Membranen 8, 15 abgetrennt wurde und somit den Ausbeuteverlust der Membraneinheit 4 darstellt. Der zweite Retentatstrom 18 der letzten Membranstufe 14 soll für den zusätzlichen Verfahrensschritt in der Vorreinigungseinheit 3 verwendet werden, wodurch zusätzlich eine zumindest teilweise Rückgewinnung der im zweiten Retentatstrom 18 enthaltenen Produktkomponente erreicht und somit die Gesamtausbeute der Anlage 1 nochmals gesteigert wird.

Durch den Einsatz der Vorreinigungseinheit 3 erfolgt die Vorbehandlung des Einsatzgasstroms 2 in nur einem einzigen Verfahrensschritt, wodurch auf den Einsatz von üblichen und aufwendigen Vorbehandlungsschritten verzichtet werden kann. Durch die Verwendung des Retentatstroms 10, 18 einer oder mehrerer Membrantrennstufen 7, 14 in der Vorreinigungseinheit 3 können die Verluste der Produktkomponente über der Vorreinigungseinheit 3 auf ein Minimum reduziert werden und liegen damit in derselben Größenordnung wie bei bekannten, jedoch sehr aufwändigen und kostenintensiven Verfahren zur Vorbehandlung des Einsatzgasstroms 2 wie beispielsweise Wäsche, TSA oder die Verwendung einer kryogenen Einheit. Durch das Verwenden des zweiten Retentatstroms 18 in der Vorreinigungseinheit 3 wird zusätzlich eine zumindest teilweise Rückgewinnung der im Retentat enthaltenen Produktkomponente und damit eine Steigerung der Gesamtausbeute erreicht.

Von der Vorreinigungseinheit 3 wird ein aus dem Einsatzgasstrom 2 abgetrennter Off-Gasstrom oder Schadkomponentenstrom 19 weggeführt. Grundsätzlich kann der Retentatstrom 10, 18 jeder Membrantrennstufe 7, 14 verwendet werden, es muss nicht zwingend der zweite Retentatstrom 18 der letzten Membrantrennstufe 14 verwendet werden. Des Weiteren muss nicht der jeweilige gesamte Retentatstrom 10, 18 verwendet werden, vielmehr kann auch nur ein Teilstrom desjeweiligen Retentatstroms 10, 18 verwendet werden.

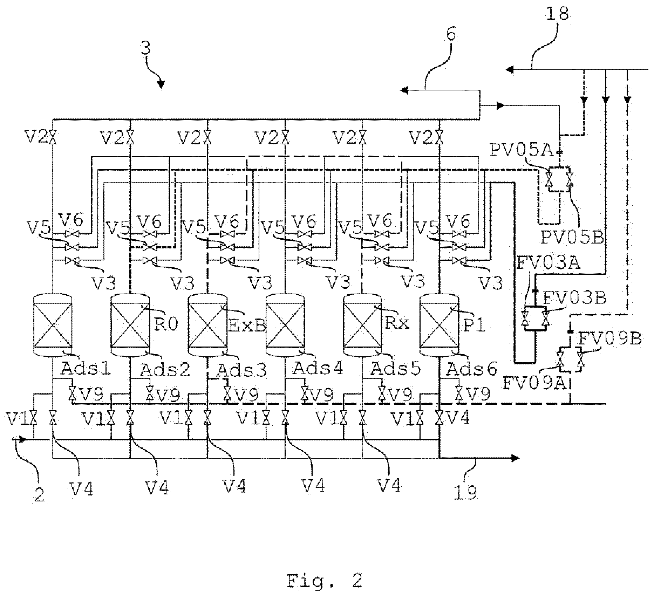

Die Fig. 2 zeigt eine schematische Detailansicht einer beispielhaften Ausführungsform einer derartigen Vorreinigungseinheit 3. Die Vorreinigungseinheit 3 weist eine beliebige Anzahl an Adsorbern Ads1 bis Ads6 auf. Beispielsweise sind sechs Adsorber Ads1 bis Ads6 vorgesehen. Es können allerdings auch vier bis sechzehn derartige Adsorber Ads1 bis Ads6 vorgesehen sein. Mit Hilfe der sechs Adsorber Ads1 bis Ads6 ist ein sogenannter 6-Bett-Prozess möglich. Jedem Adsorber Ads1 bis Ads6 sind jeweils mehrere Ventile V1 bis V6 und V9 zugeordnet. Weiterhin umfasst die Vorreinigungseinheit 3 Ventilgruppen FV03A, FV03B, FV09A, FV09B, PV05A und PV05B. Es können auch mehr oder weniger Ventile und Ventilgruppen verwendet werden, je nach Anzahl der Adsorber Ads1 bis Ads6 und gewähltem PSA-System. Es können ferner auch die Ventilgruppen FV03A, FV03B, FV09A, FV09B, PV05A und PV05B mit jeweils nur einem einzigen Ventil ausgeführt werden.

Bei einem üblichen PSA-Verfahren werden spezielle poröse Materialien wie Zeolithe oder Aktivkohle als Adsorbens in den Adsorbern eingesetzt.

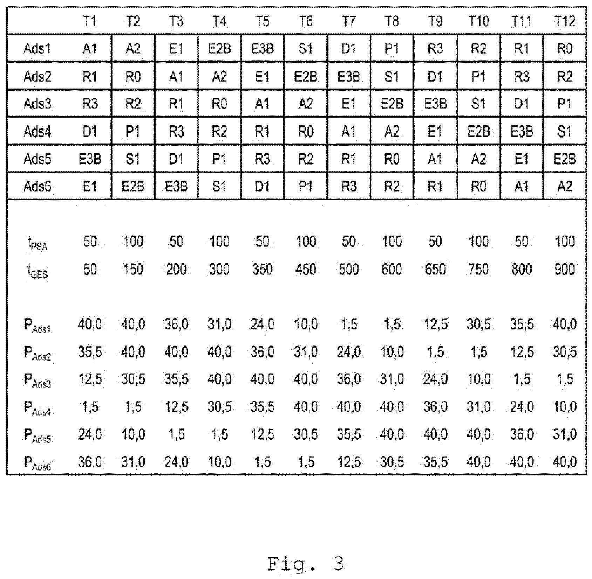

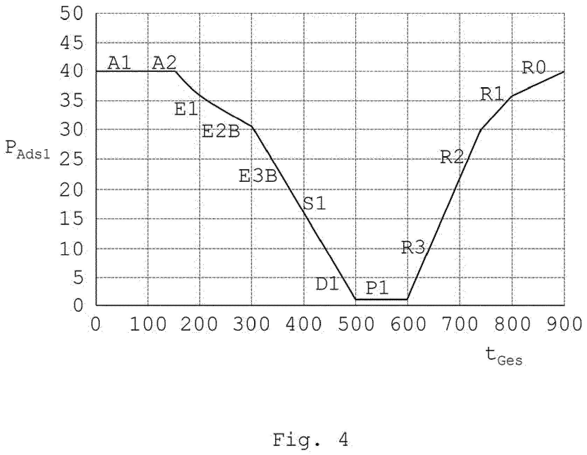

Das verbesserte PP-PSA-Verfahren, das mit Hilfe der in der Fig. 2 gezeigten Vorreinigungseinheit 3 durchgeführt werden kann, wird nachfolgend in Bezug auf die Fig. 2, die Fig. 3 sowie die Fig. 4 erläutert. Die Fig. 3 zeigt ein beispielhaftes Taktschema zum Betreiben der Vorreinigungseinheit 3 und die Fig. 4 zeigt beispielhaft ein Druckprofil des ersten Adsorbers Ads1.

Wie die Fig. 3 zeigt, umfasst das Taktschema eine Vielzahl an PSA-Sequenzen, nämlich die PSA-Sequenzen A1, A2, E1, E2B, E3B, S1, D1, P1, R3, R2, R1 und R0.

Die Adsorber Ads1 bis Ads6 können demnach, je nachdem in welcher PSA-Sequenz sie sich befinden auch mit A1, A2, E1, E2B, E3B, S1, D1, P1, R3, R2, R1 und R0 bezeichnet werden. In der Fig. 3 sind in vertikaler Richtung die Adsorber Ads1 bis Ads6 und in horizontaler Richtung die PSA-Sequenzen A1, A2, E1, E2B, E3B, S1, D1, P1, R3, R2, R1 und R0 aufgetragen. Weiterhin sind unterhalb dieses Taktschemas die jeweilige Zeit einer PSA-Sequenz t_{PSA} in Sekunden sowie die Gesamtzeit des 6-Bett-Prozesses t_{Ges} in Sekunden aufgetragen. Ferner sind in der Fig. 3 noch die Enddrücke P_{Ads1} bis p_{Ads6}, die bei den jeweiligen PSA-Sequenzen A1, A2, E1, E2B, E3B, S1, D1, P1, R3, R2, R1 und R0 in den Adsorbern Ads1 bis Ads6 herrschen, in bara dargestellt. Das Taktschema umfasst zwölf Takte T1 bis T12. Wenn alle zwölf Takte T1 bis T12 nach der Zeit t_{Ges} durchgeführt sind, beginnt der 6-Bett-Prozess von vorne, das heißt, wieder mit dem Takt T1.

Die einzelnen PSA-Sequenzen A1, A2, E1, E2B, E3B, S1, D1, P1, R3, R2, R1 und R0 werden im Folgenden kurz erläutert. Die vorzugweise identischen PSA-Sequenzen A1 und A2 umfassen jeweils die Adsorption auf hohem Druck. Dabei strömt der Einsatzgasstrom 2 (Wertkomponente + Schadkomponenten) über das jeweilige Ventil V1 in den jeweiligen Adsorber Ads1 bis Ads6. Die Schadkomponenten (= gut adsorbierende Komponenten) adsorbieren auf dem Adsorbens und die Wertkomponente (= schlechter adsorbierende Komponente), in diesem Fall Helium, sowie Stickstoff strömen am Adsorberkopf über das jeweilige Ventil V2 als vorgereinigter Einsatzgasstrom 6 ab. Beispielsweise wird im Takt T1 der Adsorber Ads1 mit der PSA-Sequenz A1 (siehe erste Spalte "Takt T1" der Fig. 3) und im Takt T2 mit der PSA-Sequenz A2 (siehe zweite Spalte "Takt T2" der Fig. 3) gefahren.

Bei der PSA-Sequenz E1/R1 wird ein erster Druckausgleich durchgeführt. Die PSA-Sequenzen E1 und R1 werden immer zusammen ausgeführt, das heißt, zwei der Adsorber Ads1 bis Ads6 sind zusammengeschaltet. Am Ende der Adsorption, das heißt, nach der PSA-Sequenz A1, A2, ist im zu regenerierenden Adsorber noch ein wesentlicher Anteil der Wertkomponente vorhanden, dieser Anteil soll möglichst nicht verloren sondern rückgewonnen werden, um die Ausbeute des PSA-Verfahrens zu steigern. Hierzu gibt der E1-Adsorber - im Falle des Takts T1 der Adsorber Ads6 - über das Ventil V5 über Kopf Gas an den R1 -Adsorber - im Falle des Takts T1 der Adsorber Ads2 - ab, wobei auch der R1-Adsorber Ads2 hierbei sein Ventil V5 geöffnet hat und speichert somit einen gewissen Anteil der am Adsorberkopf des E1-Adsorbers Ads6 vorhandenen Wertkomponente in dem R1-Adsorber Ads2.

Bei der PSA-Sequenz E2B/R2 wird ein Druckausgleich mit Bulkphasenverdrängung durchgeführt. Die PSA-Sequenzen E2B und R2 werden immer zusammen ausgeführt, das heißt, zwei der Adsorber Ads1 bis Ads6 sind zusammengeschaltet. Auch nach der PSA-Sequenz E1/R1 ist im zu regenerierenden Adsorber noch ein wesentlicher Anteil der Wertkomponente vorhanden. Dieser Anteil soll möglichst vollständig rückgewonnen werden, um die Ausbeute des PSA-Verfahrens zu steigern. Hierzu gibt der E2B-Adsorber - im Falle des Takts T2 der Adsorber Ads6 - über das Ventil V6 über Kopf Gas an den R2-Adsorber - im Falle des Takts T2 der Adsorber Ads3 - ab, wobei auch der R2-Adsorber Ads3 hierbei sein Ventil V6 geöffnet hat und speichert somit einen gewissen Anteil der am Adsorberkopf vorhandenen Wertkomponente im R2-Adsorber Ads3. Diese Konstellation beschreibt einen üblichen Druckausgleich (E-Adsorber gibt Gas an R-Adsorber ab), den auch bekannte PSA-Verfahren aufweisen.

Zusätzlich wird nun während der E2B/R2-Sequenz von dem zweiten Retentatstrom 18 Retentatgas (vorzugsweise Stickstoff) über die Ventilgruppen FV09A und FV09B und das Ventil V9 von unten in den E2B-Adsorber Ads6 geleitet und somit die Wertkomponente aus dem E2B-Adsorber Ads6 in den R2-Adsorber Ads3 geschoben und dort gespeichert. Beispielhaft ist in der Fig. 2 der Druckaufbau eines R2-Adsorbers Ads5 mit Hilfe eines E2B-Adsorbers Ads3 und des zweiten Retentatstroms 18 mit Hilfe einer dicken langgestrichelten Linie gezeigt.

Die PSA-Sequenz E3B/R3 steht analog zu der PSA-Sequenz E2B/R2 für einen Druckausgleich mit Bulkphasenverdrängung. Der E3B-Adsorber ist im Takt T1 der Adsorber Ads5 und der R3-Adsorber ist im Takt T1 der Adsorber Ads3. Am Ende der PSA-Sequenz E3B ist ein sehr großer Anteil der Wertkomponente, welche am Ende der Adsorptionsphase im E3B-Adsorber Ads5 noch vorhanden war, aus dem E3B-Adsorber Ads5 in dem R3-Adsorber Ads3 gespeichert, wodurch der Verlust der Wertkomponente minimiert und damit die Ausbeute der Wertkomponente maximiert ist. Dabei wird nicht nur das Helium vom Adsorberkopf verdrängt, sondern das Helium aus dem gesamten Adsorber. Üblicherweise befindet sich am Ende der Adsorption im unteren Bereich des Adsorbers eine Helium-Feedgaskonzentration und am Adsorberkopf Helium-reicheres Gas mit höherer Heliumkonzentration.

Die PSA-Sequenz S1/P1 umfasst das Bereitstellen von Spülgas. Der S1-Adsorber - im Falle des Takts T2 der Adsorber Ads5 - gibt über das Ventil V3 Gas über Kopf an den P1-Adsorber - im Falle des Takts T2 der Adsorber Ads4 - ab, wobei der P1-Adsorber Ads4 hierbei sein Ventil V3 sowie sein Ventil V4 geöffnet hat. Der P1-Adsorber Ads4 wird mit dem vom S1-Adsorber Ads5 abgegebenen Gas durchströmt und somit gespült, das heißt, regeneriert. Dabei desorbieren die Schadkomponenten von der Adsorbensoberfläche und werden mit dem Spülgas über das Ventil V4 in den Schadkomponentenstrom 19 abgegeben. Optional kann am Adsorberkopf des P1-Adsorbers Ads4 zusätzlich oder ausschließlich Retentatgas, insbesondere Stickstoff, des zweiten Retentatstroms 18 über die Ventilgruppen FV03A und FV03B zugeführt werden und der P1-Adsorber Ads. 4 somit noch effektiver gespült werden. Beispielhaft ist das Spülen eines P1-Adsorbers Ads6 mit Hilfe des zweiten Retentatstroms 18 in der Fig. 2 mit Hilfe einer dicken durchgezogenen Linie gezeigt.

Die PSA-Sequenz D1 (von engl.: Dump) beschreibt das Abgeben des Restgases in den Schadkomponentenstrom 19. Hierbei wird das verbleibende Gas im D1-Adsorber - im Falle des Takts T1 der Adsorber Ads4 - nicht mehr für das PSA-Verfahren genutzt sondern über das geöffnete Ventil V4 in den Schadkomponentenstrom 19 abgegeben.

Die PSA-Sequenz R0 beschreibt einen letzten Druckaufbautakt. Der R0-Adsorber - im Falle des Takts T2 der Adsorber Ads2 - wird mit PSA-Produktgas aus dem vorgereinigten Einsatzgasstrom 6 über die Ventile PV05A und PV05B und das Ventil V5 des R0-Adsorbers Ads2 über Kopf auf hohen Druck aufgedrückt. Der R0-Adsorber Ads2 kann nun wieder in die Adsorptionsphase starten und den PSA-Zyklus erneut durchlaufen. Optional kann, wie in der Fig. 2 mit Hilfe einer dicken kurzgestrichelten Linie dargestellt, der RO-Adsorber, in diesem Fall der Adsorber Ads2, auch mit Retentatgas (Stickstoff) des zweiten Retentatstroms 18 aufgedrückt werden. In diesem Fall würden die Ventile PV05A und PV05B nicht mit dem vorgereinigten Einsatzgasstrom 6 verbunden sein, sondern mit dem zweiten Retentatstrom 18. Der letzte Druckaufbautakt R0 kann auch über andere Ventile erfolgen, beispielsweise über die Ventilgruppen FV03A, FV03B, FV09A, FV09B. Weiterhin kann der letzte Druckaufbautakt auch mit Feedgas über das Ventil V1 erfolgen.

Ein beispielhaftes Druckprofil des Adsorbers Ads1 ist in der Fig. 4 gezeigt, wobei auf der horizontalen Achse die Zeit t_{Ges} und auf der vertikalen Achse der Enddruck p_{Ads1} in bara des Adsorbers Ads. 1 aufgetragen ist. Dieses Druckprofil entspricht den Takten T1 bis T12 des Adsorbers Ads1. Zunächst werden die PSA-Sequenzen A1 und A2 bei einem hohen Enddruck p_{Ads1} von 40 bara durchgeführt. Hierbei wird der Einsatzgasstrom 2 von den Schadkomponenten befreit, die auf dem Adsorbens adsorbieren. Nach dem Takt A2 ist der Adsorber Ads1 voll beladen und muss regeneriert werden.

Bei der folgenden PSA-Sequenz E1, bei der der Adsorber Ads3 als R1-Adsorber (Takt T3 der Fig. 3) wirkt, wird ein erster Druckausgleich durchgeführt. Um die nach den PSA-Sequenzen A1 und A2 noch vorhandene Wertkomponente rückgewinnen zu können, gibt der E1-Adsorber Ads1 über die geöffneten Ventile V5 über Kopf Gas an den R1-Adsorber Ads3 ab. In der PSA-Sequenz E2B gibt der Adsorber Ads1 über die geöffneten Ventile V6 über Kopf Gas an den R2-Adsorber Ads4 (Takt T4 der Fig. 3) ab. Zusätzlich kann jetzt Retentatgas aus dem zweiten Retentatstrom 18 über die Ventilgruppen FV09A und FV09B über das Ventil V9 von unten in den E2B-Adsorber Ads1 geleitet werden, um einen ersten Teil der im E2B-Adsorber Ads1 vorliegenden Wertkomponente in den R2-Adsorber Ads4 zu schieben.

Auf die PSA-Sequenz E2B folgt im Takt T5 die PSA-Sequenz E3B. Hierbei ist der Adsorber Ads5 der korrespondierende R3-Adsorber (Takt T5 der Fig. 3) des E3B-Adsorbers Ads1. Am Ende der PSA-Sequenz E3B ist ein sehr großer Anteil der Wertkomponente, welcher am Ende der Adsorptionsphase (PSA-Sequenzen A1 und A2) noch im Adsorber Ads1 vorhanden war in den R-Adsorbern Ads4 und Ads5 gespeichert.

Bei der nachfolgenden PSA-Sequenz S1 gibt der S1-Adsorber Ads1 über das geöffnete Ventil V5 über Kopf Gas an den P1-Adsorber Ads6 (Takt T6 der Fig. 3) ab. Der P1-Adsorber Ads6 hat dabei seine Ventile V3 und V4 geöffnet. Der P1-Adsorber Ads6 wird somit mit Gas aus dem S1-Adsorber Ads1 gespült und regeneriert. In der PSA-Sequenz D1 (Takt T7 der Fig. 3) wird das im D1-Adsorber Ads1 verbleibende Gas über das Ventil V4 dem Schadkomponentenstrom 19 zugeführt. Wie in der Fig. 4 zu erkennen ist, ist der Adsorber Ads1 nun nahezu drucklos.

Auf die PSA-Sequenz D1 folgt im Takt T8 die PSA-Sequenz P1 und somit das Regenerieren des Adsorbers Ads1. Hierbei wird von dem S1 -Adsorber Ads2 über die geöffneten Ventile V3 über Kopf Gas an den P1-Adsorber Ads1 abgegeben, der dabei sein Ventil V4 geöffnet hat, um das Spülgas dem Schadkomponentenstrom 19 zuzuführen. Zusätzlich kann am Adsorberkopf des P1-Adsorbers Ads1 über die Ventilgruppen FV03A und FV03B zusätzlich oder ausschließlich Retentatgas des zweiten Retentatstroms 18 zugeführt werden, um diesen noch effektiver zu spülen.

Der Druckausgleich erfolgt in den nachfolgenden PSA-Sequenzen R3 und R2. Der Adsorber Ads3 ist hierbei der E3B-Adsorber (Takt T9 der Fig. 3) und der Adsorber Ads4 ist der E2B-Adsorber (Takt T10 der Fig. 3). Der E3B-Adsorber Ads3 und der E2B-Adsorber Ads4 geben jeweils nacheinander mittels des geöffneten Ventils V6 über Kopf Gas an den R3 bzw. R2-Adsorber Ads1 ab, der dann ebenfalls sein Ventil V6 geöffnet hat. Das Gas enthält einen wesentlichen Teil Wertkomponente, die rückgewonnen werden soll. Zusätzlich wird Retentatgas aus dem zweiten Retentatstrom 18 über die Ventilgruppen FV09A und FV09B und das jeweilige Ventil V9 in den E3B-Adsorber Ads3 beziehungsweise den E2B-Adsorber Ads4 geleitet, wodurch die Wertkomponente in den Adsorber Ads1 geleitet wird und, wie in der Fig. 4 gezeigt, ein Druckaufbau in demselben erreicht wird. Hierbei ist es besonders vorteilhaft, dass der zweite Retentatstrom 18 zum einen auf einem hohen Druck vorliegt und zum anderen arm an Schadkomponenten ist und im Wesentlichen Stickstoff aufweist. Auf einen Verdichter zur Druckerhöhung kann somit verzichtet werden. Die Schadkomponenten müssen in der Vorreinigungseinheit 3 nicht vollständig aus dem Einsatzgas 2 abgetrennt werden. Insbesondere ist ein Durchbruch der Schadkomponenten grundsätzlich möglich und zulässig, sofern deren Konzentrationen zu keiner Beeinträchtigung der Membraneinheit 4 führen. Damit kann also auch in jedem Retentatstrom 10, 18, insbesondere in dem zweiten Retentatstrom 18, das heißt, in jenem, welcher für die Vorreinigungseinheit 3 verwendet wird, ein gewisser Anteil an Schadkomponenten enthalten sein.

In der folgenden PSA-Sequenz R1 ist der Adsorber Ads5 der E1-Adsorber (Takt T11 der Fig. 3). Der E1-Adsorber Ads5, der nicht mehr adsorbierfähig ist und somit am Adsorberkopf noch einen wesentlichen Anteil an Wertkomponente aufweist, gibt über die geöffneten Ventile V5 Gas an den regenerierten R1-Adsorber Ads1 ab. Die Wertkomponente aus dem E1-Adsorber Ads5 wird in dem R1-Adsorber Ads1 gespeichert.

Im Takt T12 wird in der PSA-Sequenz R0 der Adsorber Ads1 mit PSA-Produktgas aus dem vorgereinigten Einsatzgasstrom 6 über die geöffneten Ventile PV05A, PV05B und V5 auf hohen Druck gedrückt. Der Enddruck p_{Ads1} beträgt dann, wie zu Anfang des PSA-Zyklus, wieder 40 bara. Der Adsorber Ads1 kann nun wieder in die Adsorptionsphase (Takt T1 der Fig. 3) starten und den PSA-Zyklus erneut durchlaufen. Optional kann der RO-Adsorber Ads1 auch mit Retentatgas aus dem zweiten Retentatstrom 18 aufgedrückt werden.

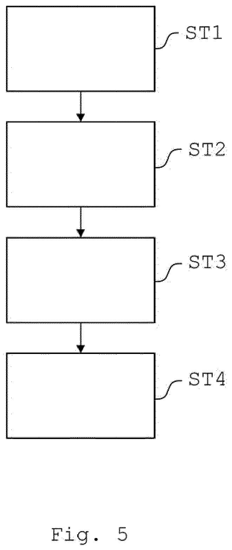

Ein in der Fig. 5 schematisch gezeigtes Verfahren zum Gewinnen von Helium aus dem Helium-haltigen Einsatzgas 2 umfasst mehrere Schritte ST1 bis ST4. In einem Schritt ST1 wird das Helium-haltige Einsatzgas 2 zu der Vorreinigungseinheit 3 zugeführt, wobei mit Hilfe der Vorreinigungseinheit 3 in einem Druckwechsel-Adsorptions-Prozess Schadkomponenten aus dem Helium-haltigen Einsatzgas 2 entfernt werden, um das vorgereinigte Einsatzgas 6 zu erhalten. In einem nachfolgenden Schritt ST2 wird das vorgereinigte Einsatzgas 6 zu der der Vorreinigungseinheit 3 nachgeschalteten Membraneinheit 4 zugeführt, welche zumindest eine Membran 8, 15 aufweist, die für Helium leichter permeabel ist als für zumindest eine weitere in dem vorgereinigten Einsatzgas 6 enthaltene Komponente, wie beispielsweise Stickstoff.

In einem weiteren Schritt ST3 wird der druckbeaufschlagte zweite Retentatstrom 18, welcher die zumindest eine Membran 8, 15 nicht durchtreten hat, zu der Vorreinigungseinheit 3 geleitet. In einem Schritt ST4 wird mit Hilfe des druckbeaufschlagten Retentatstroms 18 Helium-reiches Gas aus einem zu regenerierenden Adsorber E2B, E3B der Vorreinigungseinheit 3 in einen bereits regenerierten Adsorber R2, R3 der Vorreinigungseinheit 3 verdrängt.

Dadurch, dass in den PSA-Sequenzen E1/R1, E2B/R2 und E3B/R3 die im nicht mehr adsorptionsfähigen E1-Adsorber, E2B-Adsorber und E3B-Adsorber vorhandene Wertkomponente in die adsorptionsfähigen R-Adsorber geschoben wird, kann das Produktgas mit besonders hoher Ausbeute der Wertkomponente produziert werden. Durch die Verwendung des auf einem hohen Druck vorliegenden Retentatgases aus dem zweiten Retentatstrom 18 zum Verdrängen der Wertkomponente in die R-Adsorber und zum Druckaufbau, kann auf einen Verdichter oder Kompressor zum Druckaufbau verzichtet werden. Weiterhin kann auch die noch im zweiten Retentatstrom 18 enthaltene Menge an Helium gewonnen werden.

Obwohl die vorliegende Erfindung anhand von Ausführungsbeispielen beschrieben wurde, ist sie vielfältig modifizierbar.

### Verwendete Bezugszeichen

- 1: verfahrenstechnische Anlage
- 2: Einsatzgasstrom / Einsatzgas
- 3: Vorreinigungseinheit
- 4: Membraneinheit
- 5: Produktgasstrom
- 6: vorgereinigter Einsatzgasstrom / vorgereinigtes Einsatzgas
- 7: erste Membrantrennstufe
- 8: Membran
- 9: erster Permeatstrom / erstes Permeat
- 10: erster Retentatstrom / erstes Retentat
- 11: erster Verdichter
- 12: He-PSA-Einrichtung
- 13: Spülgasstrom
- 14: zweite Membrantrennstufe
- 15: Membran
- 16: zweiter Permeatstrom / zweites Permeat
- 17: zweiter Verdichter
- 18: zweiter Retentatstrom / zweites Retentat
- 19: Schadkomponentenstrom

- Ads1: Adsorber
- Ads2: Adsorber
- Ads3: Adsorber
- Ads4: Adsorber
- Ads5: Adsorber
- Ads6: Adsorber
- A1: PSA-Sequenz / Adsorber
- A2: PSA-Sequenz / Adsorber
- D1: PSA-Sequenz / Adsorber
- E1: PSA-Sequenz / Adsorber
- E2B: PSA-Sequenz / Adsorber
- E3B: PSA-Sequenz / Adsorber
- FV03A: Ventilgruppe
- FV09A: Ventilgruppe
- FV03B: Ventilgruppe
- FV09B: Ventilgruppe
- PV05A: Ventilgruppe
- PV05B: Ventilgruppe
- R0: PSA-Sequenz / Adsorber
- R1: PSA-Sequenz / Adsorber
- R2: PSA-Sequenz / Adsorber
- R3: PSA-Sequenz / Adsorber
- p_{Ads1}: Enddruck
- p_{Ads2}: Enddruck
- p_{Ads3}: Enddruck
- p_{Ads4}: Enddruck
- p_{Ads5}: Enddruck
- p_{Ads6}: Enddruck
- P1: PSA-Sequenz / Adsorber
- S1: PSA-Sequenz / Adsorber
- ST1: Schritt
- ST2: Schritt
- ST3: Schritt
- ST4: Schritt
- t_{Ges}: Zeit
- t_{PSA}: Zeit
- T1: Takt
- T2: Takt
- T3: Takt
- T4: Takt
- T5: Takt
- T6: Takt
- T7: Takt
- T8: Takt
- T9: Takt
- T10: Takt
- T11: Takt
- T12: Takt
- V1: Ventil
- V2: Ventil
- V3: Ventil
- V4: Ventil
- V5: Ventil
- V6: Ventil
- V9: Ventil

## Patentansprüche

1. Verfahren zum Gewinnen von Helium aus einem Helium-haltigen Einsatzgas (2), mit folgenden Schritten:
Zuführen (ST1) des Helium-haltigen Einsatzgases (2) zu einer Vorreinigungseinheit (3), wobei mit Hilfe der Vorreinigungseinheit (3) in einem Druckwechsel-Adsorptions-Prozess Schadkomponenten aus dem Helium-haltigen Einsatzgas (2) entfernt werden, um ein vorgereinigtes Einsatzgas (6) zu erhalten;
Zuführen (ST2) des vorgereinigten Einsatzgases (6) zu einer der Vorreinigungseinheit (3) nachgeschalteten Membraneinheit (4), welche zumindest eine Membran (8, 15) aufweist, die für Helium leichter permeabel ist als für zumindest eine weitere in dem vorgereinigten Einsatzgas (6) enthaltene Komponente;
Zuführen (ST3) eines druckbeaufschlagten Helium-armen Retentatstroms (18) der Membraneinheit (4), welcher die zumindest eine Membran (8, 15) nicht durchtreten hat, zu der Vorreinigungseinheit (3); und
Verdrängen (ST4) von Helium-reichem Gas mit Hilfe des druckbeaufschlagten Helium-armen Retentatstroms (18) aus einem zu regenerierenden Adsorber (E2B, E3B) der Vorreinigungseinheit (3) in einen bereits regenerierten Adsorber (R2, R3) der Vorreinigungseinheit (3).

2. Verfahren nach Anspruch 1, wobei ein erster Permeatstrom (9) der Membraneinheit (4) einer He-PSA-Einrichtung (12) zugeführt wird, mit Hilfe welcher der erste Permeatstrom (9) bis auf eine Reinheit von Helium von größer als 99,0 Volumenprozent aufgereinigt wird.

3. Verfahren nach Anspruch 1 oder 2, wobei der druckbeaufschlagte Helium-arme Retentatstrom (18) einen Druck von 35 bis 40 bara, bevorzugt von 36 bis 39 bara, weiter bevorzugt von 37 bara aufweist.

4. Verfahren nach einem der Ansprüche 1 - 3, wobei der druckbeaufschlagte Helium-arme Retentatstrom (18) ein Stickstoff-reicher Strom ist oder wobei der druckbeaufschlagte Helium-arme Retentatstrom (18) ein Methan-reicher Strom ist.

5. Verfahren nach einem der Ansprüche 1 - 4, wobei die zumindest eine weitere in dem vorgereinigten Einsatzgas (6) enthaltene Komponente Stickstoff ist.

6. Verfahren nach einem der Ansprüche 1 - 5, wobei die Schadkomponenten Kohlendioxid, höhere Kohlenwasserstoffe, Schwefeldioxid und/oder Wasser umfassen.

7. Verfahren nach einem der Ansprüche 1 - 6, wobei der druckbeaufschlagte Helium-arme Retentatstrom (18) zum Regenerieren eines zu regenerierenden Adsorbers (P1) der Vorreinigungseinheit (3) eingesetzt wird und/oder wobei der druckbeaufschlagte Helium-arme Retentatstrom (18) zum Druckaufbau in einem mit Druck zu beaufschlagenden Adsorber (R0, R1) der Vorreinigungseinheit (3) eingesetzt wird.

8. Verfahren nach einem der Ansprüche 1 - 7, wobei nur ein Teilstrom des druckbeaufschlagten Helium-armen Retentatstroms (18) verwendet wird.

9. Verfahren nach einem der Ansprüche 1 - 8, wobei vor dem Verdrängen (ST4) des Helium-reichen Gases mit Hilfe des druckbeaufschlagten Helium-armen Retentatstroms (18) ein zu regenerierender Adsorber (E1) Helium-reiches Gas an einen bereits regenerierten Adsorber (R1) abgibt.

10. Verfahren nach einem der Ansprüche 1 - 9, wobei mit Hilfe der Membraneinheit (4) an einer ersten Membrantrennstufe (7) ein erster Helium-armer druckbeaufschlagter Retentatstrom (10) und an einer zweiten Membrantrennstufe (14) aus dem ersten Helium-armen druckbeaufschlagten Retentatstrom (10) ein zweiter Helium-armer druckbeaufschlagter Retentatstrom (18) erzeugt wird, welcher der Vorreinigungseinheit (3) zugeführt wird.

11. Verfahren nach Anspruch 10, wobei an der ersten Membrantrennstufe (7) ein erster Helium-reicher Permeatstrom (9) erzeugt wird, der zum Abspalten eines Helium-reichen Produktgasstroms (5) einer He-PSA-Einrichtung (12) der Membraneinheit (4) zugeführt wird.

12. Verfahren nach Anspruch 11, wobei der erste Helium-reiche Permeatstrom (9) vor dem Zuführen zu der He-PSA-Einrichtung (12) mit Hilfe eines ersten Verdichters (11) verdichtet wird.

13. Verfahren nach Anspruch 11 oder 12, wobei an der zweiten Membrantrennstufe (14) ein zweiter Helium-reicher Permeatstrom (16) erzeugt wird, der zusammen mit einem Spülgasstrom (13) der He-PSA-Einrichtung (12) wieder der ersten Membrantrennstufe (7) zugeführt wird.

14. Verfahren nach Anspruch 13, wobei der zweite Helium-reiche Permeatstrom (16) und der Spülgasstrom (13) der He-PSA-Einrichtung (12) vor dem Zuführen zu der ersten Membrantrennstufe (7) zusammen mit Hilfe eines zweiten Verdichters (17) verdichtet werden.

15. Verfahrenstechnische Anlage (1), insbesondere zum Durchführen eines Verfahrens nach einem der Ansprüche 1 - 14, zum Gewinnen von Helium aus einem Helium-haltigen Einsatzgas (2), mit einer Vorreinigungseinheit (3), die dazu eingerichtet ist, mit Hilfe eines Druckwechsel-Adsorptions-Prozesses Schadkomponenten aus dem Helium-haltigen Einsatzgas (2) zu entfernen, um ein vorgereinigtes Einsatzgas (6) zu erhalten, einer der Vorreinigungseinheit (3) nachgeschalteten Membraneinheit (4), welche zumindest eine Membran (8, 15) aufweist, die für Helium leichter permeabel ist als für zumindest eine weitere in dem vorgereinigten Einsatzgas (6) enthaltene Komponente, um einen druckbeaufschlagten Helium-armen Retentatstrom (18) zu erzeugen, welcher die zumindest eine Membran (8, 15) nicht durchtreten hat, wobei die Vorreinigungseinheit (3) mehrere Adsorber (Ads1 - Ads6) und mehrere Ventilgruppen (FV09A, FV09B, V6, V9) aufweist, die so schaltbar sind, dass mit Hilfe des druckbeaufschlagten Helium-armen Retentatstroms (18) Helium-reiches Gas aus einem zu regenerierenden Adsorber (E2B, E3B) in einen bereits regenerierten Adsorber (R2, R3) verdrängbar ist.

## Claims

1. Method of obtaining helium from a helium-containing feed gas (2), comprising the following steps:
feeding (ST1) the helium-containing feed gas (2) to a prepurifying unit (3), with removal of undesirable components from the helium-containing feed gas (2) in a pressure swing adsorption process with the aid of the prepurifying unit (3), in order to obtain a prepurified feed gas (6);
feeding (ST2) the prepurified feed gas (6) to a membrane unit (4) which is connected downstream of the prepurifying unit (3) and has at least one membrane (8, 15) which is more readily permeable to helium than to at least one further component present in the prepurified feed gas (6);
feeding (ST3) a pressurized low-helium retentate stream (18) from the membrane unit (4) that has not passed through the at least one membrane (8, 15) to the prepurifying unit (3); and
displacing (ST4) helium-rich gas with the aid of the pressurized low-helium retentate stream (18) from an adsorber (E2B, E3B) to be regenerated in the prepurifying unit (3) into an already regenerated adsorber (R2, R3) of the prepurifying unit (3).

2. Method according to Claim 1, wherein a first permeate stream (9) is fed to the membrane unit (4) of an He PSA device (12), with the aid of which the first permeate stream (9) is purified up to a purity of helium of greater than 99.0 per cent by volume.

3. Method according to Claim 1 or 2, wherein the pressurized low-helium retentate stream (18) has a pressure of 35 to 40 bara, preferably of 36 to 39 bara, further preferably of 37 bara.

4. Method according to any of Claims 1-3, wherein the pressurized low-helium retentate stream (18) is a nitrogen-rich stream or wherein the pressurized low-helium retentate stream (18) is a methane-rich stream.

5. Method according to any of Claims 1-4, wherein the at least one further component present in the prepurified feed gas (6) is nitrogen.

6. Method according to any of Claims 1-5, wherein the undesirable components comprise carbon dioxide, higher hydrocarbons, sulphur dioxide and/or water.

7. Method according to any of Claims 1-6, wherein the pressurized low-helium retentate stream (18) is used to regenerate an adsorber (P1) to be regenerated in the prepurifying unit (3) and/or wherein the pressurized low-helium retentate stream (18) is used to increase the pressure in an adsorber (R0, R1) to be pressurized in the prepurifying unit (3).

8. Method according to any of Claims 1-7, wherein only a substream of the pressurized low-helium retentate stream (18) is used.

9. Method according to any of Claims 1-8, wherein the displacement (ST4) of the helium-rich gas with the aid of the pressurized low-helium retentate stream (18) is preceded by release of helium-rich gas by an adsorber (E1) to be regenerated to an already regenerated adsorber (R1).

10. Method according to any of Claims 1-9, wherein, with the aid of the membrane unit (4), a first low-helium pressurized retentate stream (10) is produced from the first low-helium pressurized retentate stream (10) at a first membrane separation stage (7) and a second low-helium pressurized retentate stream (18) at a second membrane separation stage (14), the latter being supplied to the prepurifying unit (3).

11. Method according to Claim 10, wherein a first helium-rich permeate stream (9) is produced at the first membrane separation stage (7) and is fed to an He PSA device (12) of the membrane unit (4) for splitting-off of a helium-rich product gas stream (5).

12. Method according to Claim 11, wherein the first helium-rich permeate stream (9), before being fed to the He PSA device (12), is compressed with the aid of a first compressor (11).

13. Method according to Claim 11 or 12, wherein a second helium-rich permeate stream (16) is produced at the second membrane separation stage (14) and is fed back to the first membrane separation stage (7) together with a purge gas stream (13) from the He PSA device (12) .

14. Method according to Claim 13, wherein the second helium-rich permeate stream (16) and the purge gas stream (13) from the He PSA device (12) are compressed together with the aid of a second compressor (17) before being fed to the first membrane separation stage (7).

15. Industrial plant (1), especially for performance of a method according to any of Claims 1-14, for obtaining helium from a helium-containing feed gas (2), comprising a prepurifying unit (3) set up to remove undesirable components from the helium-containing feed gas (2) with the aid of a pressure swing adsorption process, in order to obtain a prepurified feed gas (6), a membrane unit (4) which is connected downstream of the prepurifying unit (3) and has at least one membrane (8, 15) which is more readily permeable to helium than to at least one further component present in the prepurified feed gas (6), in order to produce a pressurized low-helium retentate stream (18) that has not passed through the at least one membrane (8, 15), wherein the prepurifying unit (3) includes several adsorbers (Adsl-Ads6) and several valve groups (FV09A, FV09B, V6, V9) which are switchable such that, with the aid of the pressurized low-helium retentate stream (18), helium-rich gas is displaceable from an adsorber (E2B, E3B) to be regenerated into an already regenerated adsorber (R2, R3).

## Revendications

1. Procédé pour l'obtention d'hélium à partir d'un gaz de départ (2) contenant de l'hélium, présentant les étapes suivantes :
- introduction (ST1) du gaz de départ (2) contenant de l'hélium dans une unité de prépurification (3), les composants nuisibles étant éliminés du gaz de départ (2) contenant de l'hélium à l'aide de l'unité de prépurification (3) dans un procédé d'adsorption à pression modulée (PSA), pour obtenir un gaz de départ (6) prépurifié ;
- introduction (ST2) du gaz de départ (6) prépurifié dans une unité à membrane (4), commutée en aval de l'unité de prépurification (3) et présentant au moins une membrane (8, 15) qui est plus perméable à l'hélium qu'à au moins un autre composant contenu dans le gaz de départ (6) prépurifié ;
- introduction (ST3) d'un flux de rétentat (18) mis en pression, pauvre en hélium, de l'unité à membrane (4), qui n'est pas passé à travers ladite au moins une membrane (8, 15), dans l'unité de prépurification (3) ; et
- déplacement (ST4) de gaz riche en hélium à l'aide du flux de rétentat (18) mis en pression, pauvre en hélium, depuis un adsorbant (E2B, E3B) à régénérer de l'unité de prépurification (3) dans un adsorbant (R2, R3) déjà régénéré de l'unité de prépurification (3) .

2. Procédé selon la revendication 1, un premier flux de perméat (9) de l'unité à membrane (4) étant introduit dans un dispositif He-PSA (adsorption de He à pression modulée) (12) à l'aide duquel le premier flux de perméat (9) est purifié jusqu'à une pureté en hélium supérieure à 99,0% en volume.

3. Procédé selon la revendication 1 ou 2, le flux de rétentat (18) mis en pression, pauvre en hélium présentant une pression de 35 à 40 bara, de préférence de 36 à 39 bara, plu préférablement de 37 bara.

4. Procédé selon l'une quelconque des revendications 1-3, le flux de rétentat (18) mis en pression, pauvre en hélium étant un flux riche en azote ou le flux de rétentat (18) mis en pression, pauvre en hélium étant un flux riche en méthane.

5. Procédé selon l'une quelconque des revendications 1-4, ledit au moins un autre composant contenu dans le gaz de départ (6) prépurifié étant de l'azote.

6. Procédé selon l'une quelconque des revendications 1-5, les composants nuisibles comprenant du dioxyde de carbone, des hydrocarbures supérieurs, du dioxyde de soufre et/ou de l'eau.

7. Procédé selon l'une quelconque des revendications 1-6, le flux de rétentat (18) mis en pression, pauvre en hélium, étant utilisé pour la régénération d'un adsorbant (P1) à régénérer de l'unité de prépurification (3) et/ou le flux de rétentat (18) mis en pression, pauvre en hélium, étant utilisé pour l'augmentation de pression dans un adsorbant (R0, R1) à mettre sous pression de l'unité de prépurification (3).

8. Procédé selon l'une quelconque des revendications 1-7, seul un flux partiel du flux de rétentat (18) mis en pression, pauvre en hélium étant utilisé.

9. Procédé selon l'une quelconque des revendications 1-8, un adsorbant (E1) à régénérer transmettant un gaz riche en hélium à un adsorbant (R1) déjà régénéré avant le déplacement (ST4) du gaz riche en hélium à l'aide du flux de rétentat (18) mis en pression, pauvre en hélium.

10. Procédé selon l'une quelconque des revendications 1-9, l'unité à membrane (4) permettant d'obtenir, sur un premier étage de séparation à membrane (7), un premier flux de rétentat (10) pauvre en hélium, mis en pression et, sur un deuxième étage de séparation à membrane (14), à partir du premier flux de rétentat (10) pauvre en hélium, mis en pression, un deuxième flux de rétentat (18) pauvre en hélium, mis en pression, qui est introduit dans l'unité de prépurification (3).

11. Procédé selon la revendication 10, un premier flux de perméat (9) riche en hélium étant obtenu sur le premier étage de séparation à membrane (7), qui est introduit dans un dispositif He-PSA (12) de l'unité à membrane (4) pour dissocier un flux gazeux produit (5) riche en hélium.

12. Procédé selon la revendication 11, le premier flux de perméat (9) riche en hélium étant comprimé à l'aide d'un premier compresseur (11) avant l'introduction dans le dispositif He-PSA (12).

13. Procédé selon la revendication 11 ou 12, un deuxième flux de perméat (16) riche en hélium étant obtenu sur le deuxième étage de séparation à membrane (14), qui est de nouveau introduit, conjointement avec un flux de gaz de rinçage (13) du dispositif He-PSA (12), dans le premier étage de séparation à membrane (7).

14. Procédé selon la revendication 13, le deuxième flux de perméat (16) riche en hélium et le flux de gaz de rinçage (13) du dispositif He-PSA (12) étant comprimés conjointement à l'aide d'un deuxième compresseur (17) avant l'introduction dans le premier étage de séparation à membrane (7).

15. Installation technique de procédé (1), en particulier pour la réalisation d'un procédé selon l'une quelconque des revendications 1-14, pour l'obtention d'hélium à partir d'un gaz de départ (2) contenant de l'hélium, pourvue d'une unité de prépurification (3), qui est conçue pour éliminer des composants nuisibles du gaz de départ (2) contenant de l'hélium à l'aide d'un procédé d'adsorption à pression modulée, pour obtenir un gaz de départ (6) prépurifié, d'une unité à membrane (4) commutée en aval de l'unité de prépurification (3), qui présente au moins une membrane (8, 15), qui est plus perméable à l'hélium qu'à au moins un autre composant contenu dans le gaz de départ (6) prépurifié, pour obtenir un flux de rétentat (18) mis en pression, pauvre en hélium, qui n'est pas passé à travers ladite au moins une membrane (8, 15), l'unité de prépurification (3) présentant plusieurs adsorbants (Ads1 - Ads6) et plusieurs groupes de soupapes (FV09A, FV09B, V6, V9), qui peuvent être commutés de manière telle que du gaz riche en hélium peut être déplacé depuis un adsorbant (E2B, E3B) à régénérer dans un adsorbant (R2, R3) déjà régénéré à l'aide du flux de rétentat (18) mis en pression, pauvre en hélium.
